# EUROPÄISCHE PATENTSCHRIFT

(11) **EP 2 725 955 B1**
(45) Veröffentlichungstag und Bekanntmachung des Hinweises auf die Patenterteilung: **10.05.2017**
(21) Anmeldenummer: 12728588.0
(22) Anmeldetag: 21.06.2012
(51) Int. Cl.: A47L 9/16, A47L 9/00, B01D 45/08, B01D 45/12, B04C 5/103, B04C 5/107, B04C 5/181

(54) **FLIEHKRAFTABSCHEIDER MIT ROTIERBAREM LUFTFÜHRUNGSMITTEL**
SWIRL TUBE SEPARATOR WITH ROTATABLE AIR GUIDE
TUBE SÉPARATEUR À VORTEX AVEC DISPOSITIF DE GUIDAGE ROTATIVE

(30) Priorität: 30.06.2011 DE 102011078413
(43) Veröffentlichungstag der Anmeldung: 07.05.2014
(73) Patentinhaber: BSH Hausgeräte GmbH, 81739 München (DE)
(72) Erfinder: SEITH, Thomas, 97616 Bad Neustadt (DE); FEHN, Daniel, 96358 Teuschnitz (DE)
(86) Internationale Anmeldenummer: PCT/EP2012/061905
(87) Internationale Veröffentlichungsnummer: WO 2013/000800

(56) Entgegenhaltungen:
- WO-A1-00/21428
- DE-A1- 3 624 086
- DE-A1-102005 017 274
- SU-A1- 1 667 937
- US-A- 3 675 401

## Beschreibung

### Gebiet der Erfindung

Die Erfindung betrifft einen Fliehkraftabscheider für einen Staubsauger, wobei der Fliehkraftabscheider einen Abscheideraum (5), in dem Saugluft des Staubsaugers rotieren kann, einen Sauglufteinlass (4), durch den mit Staubpartikeln beladene Saugluft in den Abscheideraum (5) eintreten kann, ein stationäres Lufteinleitmittel (6), um für eine Rotation der Saugluft im Abscheideraum (5) zu sorgen, eine Staubauswurföffnung (9), durch die ein mittels Zentrifugalkraft von der rotierenden Saugluft abgeschiedener Staubanteil der Saugluft aus dem Abscheideraum (5) austreten kann, und einen Saugluftauslass (16), durch den die von dem Staubanteil befreite Saugluft aus dem Abscheideraum (5) aus treten kann, umfasst.

### Hintergrund der Erfindung

Die Offenlegungsschrift EP 1 042 980 A1 offenbart einen Zyklonstaubsauger, bei dem durch die Zentrifugalkraft Staub von der Saugluft abgeschieden wird. Dazu ist in einer Abscheidekammer des Zyklonstaubsaugers ein Impeller angeordnet, der zur Erzeugung der Zentrifugalkraft eine schnelle Drehbewegung der Saugluft erzeugt.

Die Patentschrift EP 1 173 086 B1 offenbart eine Einrichtung zum Vermindern des Druckverlusts in einer Zyklonstaubsammelvorrichtung, bei der dem Tauchrohr gegenüberliegend ein Laminarstrommittel angeordnet ist, das die rotierende Saugluft laminarisieren soll, sodass sie ihre rotierende Kraft verliert, bevor sie in das Tauchrohr eintritt. Das Laminarstrommittel ist ein langgestrecktes Element mit einem kreuzförmigen Querschnitt.

Auch die Offenlegungsschrift DE 36 24 086 A1 offenbart einen Zyklonabscheider, bei dem Druckverluste vermindert werden sollen. Hierzu ist eine kegelförmige Wirbelstütze mit als Führungsflächen dienenden Leitschaufeln ausgestattet. Sie soll eine Verstärkung der Axialkomponente der Strömung des Zentralwirbels auf Kosten der Radialkomponente bewirken. Die Leitschaufeln können dabei auch in einen Gasaustrittsstutzen, hinein verlängert werden.

Die Offenlegungsschrift DE 10 2005 017 274 A1 schließlich offenbart einen Staubsauger mit einer Zyklontrennvorrichtung, deren Luftabgaberohr mit lärmreduzierenden Rippen ausgestattet ist. Diese Lärmreduzierungsrippen treten auf einer Innenwand des Luftabgaberohrs in Richtung Mitte des Luftabgaberohrs hervor und haben neben einer lärmreduzierenden auch eine den Druckverlust senkende Wirkung.

Weiter offenbart die SU 1667937 A1 einen Fliehkraftabscheider, umfassend einen Abscheideraum, in dem Saugluft des Staubsaugers rotieren kann, einen Sauglufteinlass, durch den mit Staubpartikeln beladene Saugluft in den Abscheideraum eintreten kann, ein stationäres Lufteinleitmittel, um für eine Rotation der Saugluft im Abscheideraum zu sorgen, eine Staubauswurföffnung, durch die ein mittels Zentrifugalkraft von der rotierenden Saugluft abgeschiedener Staubanteil der Saugluft aus dem Abscheideraum austreten kann, und einen Saugluftauslass, durch den die von dem Staubanteil befreite Saugluft aus dem Abscheideraum austreten kann, wobei der Fliehkraftabscheider zum Beeinflussen der Rotation der Saugluft ein im Abscheideraum rotierbar angeordnetes Luftführungsmittel umfasst.
Weiter sei noch auf die US3 675 401 A1 hingewiesen.

Schließlich offenbart die WO 00/ 21 428 A1 einen Fliehkraftabscheider für einen Staubsauger umfassend: einen Abscheideraum, in dem Saugluft des Staubsaugers rotieren kann, einen Sauglufteinlass, durch den mit Staubpartikeln beladene Saugluft in den Abscheideraum eintreten kann, ein stationäres Lufteinleitmittel, um für eine Rotation der Saugluft im Abscheideraum zu sorgen, eine Staubauswurföffnung, durch die ein mittels Zentrifugalkraft von der rotierenden Saugluft abgeschiedener Staubanteil der Saugluft aus dem Abscheideraum austreten kann, und einen Saugluftauslass, durch den die von dem Staubanteil befreite Saugluft aus dem Abscheideraum austreten kann, wobei der Fliehkraftabscheider zum Beeinflussen der Rotation der Saugluft ein im Abscheideraum rotierbar angeordnetes Luftführungsmittel umfasst, welches durch die Saugluft antreibbar ist.

### Der Erfindung zugrundeliegende Aufgabe

Der Erfindung liegt die Aufgabe zugrunde, einen verbesserten Wirbelrohrabscheider für einen Staubsauger bereitzustellen. Vorteilhafterweise soll die Abscheideleistung, insbesondere in Bezug auf die Feinstaubabscheidung, verbessert und/oder der Druckverlust verringert werden. Außerdem soll die Geräuschentwicklung verringert werden können.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Fliehkraftabscheider für einen Staubsauger mit den Merkmalen des Anspruchs 1. Das erfindungsgemäße, rotierbar angeordnete Luftführungsmittel kann die Saugluft die durch das Lufteinleitmittel erzeugte Rotation der Saugluft beeinflussen, um sie an den Betriebszustand des Staubsaugers anzupassen. Insbesondere kann er sie je nach Bedarf die Rotation verstärken, um die Abscheideleistung des Feinstaubabscheiders zu verbessern, oder abschwächen, um den Druckverlust und die Geräuschentwicklung zu senken.

Ein Fliehkraftabscheider im Sinne der vorliegenden Erfindung ist eine Staubabscheideeinrichtung, die nach dem Zentrifugalprinzip arbeitet. In einen Abscheideraum des Fliehkraftabscheiders eintretende Saugluft rotiert in dem Abscheideraum, wobei aufgrund der Zentrifugalkraft ein Staubanteil der Saugluft von dieser abgetrennt wird und den Abscheideraum durch eine Staubauswurföffnung verlässt. Durch die Staubauswurföffnung gelangt der Staubanteil gewöhnlich in eine Staubsammelbox, die den Staub sammelt und die entleert werden kann. Die von dem Staubanteil befreite Saugluft tritt durch einen Saugluftauslass wieder aus dem Abscheideraum aus. Typische Bauformen von Fliehkraftabscheidern sind Drallabschieder, Cyclonsenkabscheider, Wirbelabscheider und Wirbelrohrabscheider.

Der Abscheideraum des bevorzugten Fliehkraftabscheiders ist rohr- oder dosenförmig ausgebildet, wobei das Rohr oder die Dose ganz oder abschnittsweise zylindrisch, sich konisch verjüngend oder sich konisch aufweitend ausgebildet sein kann. Der Abscheideraum ist vorzugsweise im Wesentlichen rotationssymmetrisch. Besonders vorzugsweise hat der Fliehkraftabscheider eine im Wesentlichen kreisförmige Querschnittsfläche. Die Stirnseiten des Abscheideraums sind vorzugsweise verschlossen. Die bevorzugte Staubauswurföffnung ist in einer Wand des Abscheideraums angeordnet, vorzugsweise in einer Mantelfläche des Rohrs oder der Dose. Besonders vorzugsweise reicht sie bis an eine Stirnseite des Abscheideraums heran. Sie kann aber auch in einer Stirnfläche des Rohrs oder der Dose angeordnet sein, wie z.B. bei einem Cyclonsenkabscheider.

Um die in den Abscheideraum eintretende Saugluft in Rotation zu versetzen, ist ein stationäres Lufteinleitmittel vorgesehen. Das Lufteinleitmittel kann eine oder mehrere Komponenten außerhalb des Abscheideraums umfassen, z. B. einen Sauglufteinlasskanal, der in den Sauglufteinlass des Abscheideraums mündet. Der Kanal mündet besonders vorteilhaft tangential in den Abscheideraum ein. Das Lufteinlassmittel kann aber auch eine oder mehrere Komponenten innerhalb des Abscheideraums umfassen, z.B. eine Luftleitrampe, die die Saugluft entlang gleiten kann, um auf eine schraubenförmige Bahn gelenkt zu werden.

Ein Staubanteil in der Saugluft ist ein Anteil von Feststoff oder auch als Tropfen fein verteilter Flüssigkeit in der Saugluft, die von dem Fliehkraftabscheider von der Saugluft abgeschieden werden soll. Fliehkraftabscheider können gewöhnlich nur einen gewissen Teil solcher Feststoffe oder Flüssigkeiten abscheiden während ein Recht in der Saugluft verbleibt. Folglich ist ein Staubanteil im Sinne der vorliegenden Erfindung nicht notwendigerweise die Gesamtheit theoretisch abtrennbarer Feststoffe und Flüssigkeiten sondern ganz im Gegenteil gewöhnlich nur ein Teil davon.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Es sind auch Ausführungen der Erfindung denkbar, bei denen ein Antriebsmittel, z.B. ein Motor, vorzugsweise ein elektrischer Motor, vorgesehen ist, um das Luftführungsmittel rotierend anzutreiben. Je nach Rotationsgeschwindigkeit in Rotationsrichtung der Saugluft, d.h. in die Richtung, in die die Saugluft aufgrund des stationären Lufteinleitmittels rotiert, kann die Rotation der Saugluft, analog zu dem oben Beschriebenen, abgebremst oder auch beschleunigt werden. Mit einer Beschleunigung lässt sich vorteilhafterweise die Abscheideleistung der Fliehkraftabscheiders erhöhen. Die Erfindung umfasst darüber hinaus auch Ausführungen, bei denen das Luftführungsmittel entgegen der Rotationsrichtung der Saugluft, d.h. entgegen der Richtung, in die die Saugluft aufgrund des stationären Lufteinleitmittels rotiert, angetrieben wird. Hierdurch lässt sich die Rotation der Saugluft besonders effektiv abbremsen, was insbesondere den Druckverlust im Fliehkraftabscheider verringern und die Geräuschentwicklung senken kann.

Vorzugsweise erstreckt sich die Staubauswurföffnung höchstens zu 30% ihrer Höhe über einen Abschnitt des Luftführungsmittels, besonders vorzugsweise höchstens zu 20%; die Staubauswurföffnung erstreckt sich vorzugsweise zu mindestens 10% über einen Abschnitt des Luftführungsmittels.

Ein bevorzugtes Luftführungsmittel reicht zu 80% oder mehr der Distanz, die sich von der Höhe des Sauglufteinlassseitigen Rands der Staubauswurföffnung zum Saugluftauslass erstreckt, an den Sauglufteinlass heran. Dadurch ist vorteilhaft erreichbar, dass die Saugluft bis kurz vor den Sauglufteinlass hingeleitet wird. Die Rotation der Saugluft kann dadurch besonders vorteilhaft gebremst werden.

Besonders vorzugsweise erstreckt sich das Luftführungsmittel bis zur Höhe des Sauglufteinlasses, d.h. es reicht an die Höhe des Sauglufteinlasses heran.

Bei einer bevorzugten Ausführung der Erfindung reicht ein Tauchrohr in den Abscheideraum hinein. Das Ende des Tauchrohrs bildet in diesem Fall den Saugluftauslass. Ein bevorzugtes Luftführungsmittel erstreckt sich in das Tauchrohr hinein. Besonders vorzugsweise erstreckt sich das Luftführungsmittel zu maximal einem Drittel der Länge des Tauchrohrs in dieses hinein. Durch diese Ausführung der Erfindung können Wirbel in dem Tauchrohr besonders effektiv vermieden werden. Dies kann zu einer Reduzierung des Druckverlusts im Tauchrohr und damit zu einer Verbesserung des Verhältnisses zwischen Staubabscheidung und Druckverlust beitragen. Auch kann vorteilhafterweise eine Geräuschreduzierung in dem Tauchrohr erreicht werden.

Der bevorzugte Fliehkraftabscheider ist ein Wirbelrohrabscheider. Ein Wirbelrohrabscheider im Sinne der vorliegenden Erfindung ist ein Fliehkraftabscheider, bei dem die Saugluft im Abscheideraum auf einer schraubenförmigen Bahn rotiert wobei aufgrund der Zentrifugalkraft ein Staubanteil der Saugluft von dieser abgetrennt wird und den Abscheideraum durch eine Staubauswurföffnung verlässt. Die von dem Staubanteil befreite Saugluft tritt durch einen Saugluftauslass, der gewöhnlich in ein Tauchrohr mündet, wieder aus dem Abscheideraum aus. Zuvor wird gewöhnlich in Richtung des Saugluftauslasses umgelenkt, z.B. mit Hilfe eines Apexkegels. Die Vorteile der Wirbelrohrabscheider bestehen insbesondere in ihrem einfachen Konstruktionsprinzip und ihrer platzsparenden Bauweise. Beides zusammen ermöglicht bei der Konstruktion eines Staubsaugers eine besonders große Gestaltungsfreiheit. So können Wirbelrohrabscheider insbesondere sowohl stehend als auch liegend oder schräg in den Staubsauger eingebaut werden, ohne dass dies notwendigerweise Einbußen in der Abscheideleistung nach sich zieht. Auch ist der Wirbelrohrabscheider einfach skalierbar, was die Entwicklung und Konstruktion einer Serie von Staubsaugern mit unterschiedlicher Leistung erleichtert.

In einer bevorzugten Ausführung der Erfindung ist in dem Abscheideraum ein Umkehrmittel, vorzugsweise ein Apexkegel, vorgesehen, um die Saugluft von einem äußeren in einen inneren Bereich des Abscheideraums zu lenken. Ein innerer Bereich des Abscheideraums im Sinne der vorliegenden Erfindung ist ein Bereich der in die Richtungen senkrecht zur Transportrichtung nicht bis zur Wand des Abscheideraums reicht. Der innere Bereich ist von einem äußeren zur Wand reichenden Bereich umschlossen. Das Umkehrmittel ist vorzugsweise an einer Stirnseite des Abscheideraums angeordnet.

Der innere und der äußere Bereich verlaufen vorzugsweise in Transportrichtung der Saugluft entlang des Abscheideraums. In einem bevorzugten Fliehkraftabscheider verläuft die Transportrichtung des Innenwirbels gerade entgegengesetzt zu der des Außenwirbels. Vorzugsweise wird hierzu wird die Saugluft an dem Apexkegel um im Wesentlichen 180° (bezogen auf einen Vollkreis von 360°) umgelenkt. Unter einer Transportrichtung ist die Richtung des Saugluftstroms zu verstehen, in der die Saugluft durch den Abscheideraum vom Sauglufteilass zum Saugluftauslass transportiert wird. Neben einer translatorischen Komponente in die Transportrichtung kann die Saugluft noch eine rotierende Komponente aufweisen. Beide Komponenten zusammen ergeben die schraubenförmige Bahn der Saugluft.

Ein Apexkegel im Sinne der vorliegenden Erfindung ist ein sich in einer Richtung verjüngendes Gebilde, an dem die Saugluft entlanggleiten kann. Z.B. kann der Apexkegel als gerade oder schiefer Kegel oder Kegelstumpf ausgebildet sein. Ein Apexkegel im Sinne der vorliegenden Erfindung muss also nicht notwendigerweise spitz zulaufen. Auch muss die Mantellinie nicht notwendigerweise eine Gerade sein sondern sie kann auch zur Achse des Apexkegels hin konkav oder von der Achse weg konvex gekrümmt sein. Der Apexkegel kann die Luft eines Außenwirbels des Fliehkraftabscheiders besonders effektiv in einen Innenwirbel zum Saugluftauslass hin umlenken. Ein bevorzugter Apexkegel ist im Wesentlichen rotationssymmetrisch.

Das Luftführungsmittel ist vorzugsweise in dem inneren Bereich des Abscheideraums angeordnet. In einer Ausführung der Erfindung bildet das Luftführungsmittel selbst das Umkehrmittel. Insbesondere kann das Luftführungsmittel als Apexkegel ausgebildet sein. Alternativ kann das Luftführungsmittel lediglich an dem Umkehrmittel angeordnet sein. Wenn das Luftführungsmittel selbst das Umkehrmittel bildet oder das Luftführungsmittel an dem Umkehrmittel angeordnet ist, kann die Rotation der Saugluft während oder kurz nach der Umlenkung beeinflusst werden. Diese frühzeitige Beeinflussung kann insbesondere ausgenutzt werden, um die Rotation der Saugluft in einer Weise zu bremsen, die einem Druckverlust besonders effektiv entgegen wirkt und außerdem zur Geräuschreduzierung beitragen kann.

Das bevorzugte Luftführungsmittel umfasst ein flächenartiges Element, z. B. ein Blatt, eine Schaufel, eine Platte oder einen Flügel. Das bevorzugte flächenartige Element weist in Transportrichtung der Saugluft eine lineare, progressive oder degressive Steigung auf. Insbesondere erstreckt sich das bevorzugte flächenartige Element in die Transportrichtung schraubenförmig. Das bevorzugte flächenartige Element ist schaufelförmig ausgebildet, d.h. es ist im Querschnitt senkrecht zur Transportrichtung gekrümmt ausgeformt.

Vorteilhafterweise umfasst das Luftführungsmittel mehrere flächenartige Elemente, z. B. zwei, drei oder vier flächenartige Elemente, vorzugsweise von der vorbeschriebenen Art. Dadurch können benachbarte flächenartige Elemente des Luftführungsmittels gerade oder schraubenartig in Richtung Saugluftauslass verlaufender Kanäle ausbilden, die sich besonders gut zum Beeinflussen der Rotation der Saugluft eignen. Durch die lineare, progressive oder degressive Steigung der flächenartigen Elemente und die im Falle mehrerer flächenartiger Elemente ausgebildeten schraubenartigen Kanäle ist eine besonders sanfte Umlenkung und Abschwächung der Rotation der Saugluft möglich.

Das bevorzugte Luftführungsmittel bildet, im geometrischen Sinne, eine Durchdringung des Apexkegels mit dem oder den flächenartigen Elementen. Mit anderen Worten: Das Luftführungsmittel oder ein Teil des Luftführungsmittel, z.B. das oder die die flächenartigen Elemente, ragen, unmittelbar aus dem Apexkegel heraus, vorzugsweise aus der Mantelfläche des Apexkegels. Allerdings sind auch Ausführungen der Erfindung denkbar, in denen das Luftführungsmittel von den Mantelflächen des Apexkegels beabstandet ist. Zum Beispiel kann das Luftführungsmittel auf die Spitze oder Deckfläche des Apexkegels aufgesetzt sein, ggf. auch beabstandet durch einen Stift.

In einer bevorzugten Ausführung der Erfindung nimmt ein Hüllkreisdurchmesser der Luftführungsmittel-Querschnittsfläche, die senkrecht zur saugluftauslassweisenden Richtung verläuft, in Richtung des Saugluftauslasses ab. Mit anderen Worten, die Hüllfläche des Luftführungsmittels verjüngt sich in Richtung Saugluftauslass. Hierdurch lässt sich bei gegebener Größe des Luftführungsmittels eine besonders effektive Abschwächung der Rotation der Saugluft erreichen. Auch kann die Bildung von sekundärwirbeln an den Kanten flächenartiger Elemente des Luftführungsmittels entgegengewirkt werden.

Besonders vorzugsweise ist der maximale Hüllkreisdurchmesser der Luftführungsmittel-Querschnittsfläche, die senkrecht zur zum Saugluftauslass weisenden Richtung verläuft, nicht größer als der Außendurchmesser des Tauchrohrs. Hierdurch ist vorteilhafterweise vermeidbar, dass die Saugluft im äußeren Bereich in ihrer Rotation durch das Luftführungsmittel beeinträchtigt wird. Letzteres könnte sonst die Staubabscheidung ungünstig beeinflussen und damit das Verhältnis zwischen Staubabscheidung und Druckverlust und/oder Geräuschentwicklung verschlechtern.

In einer bevorzugten Ausführung der Erfindung weist die Staubauswurföffnung eine Höhe in Richtung des Saugluftauslasses auf und erstreckt sich die Staubauswurföffnung höchstens zu 50% ihrer Höhe über einen Abschnitt des Luftführungsmittels. Dadurch kann erreicht werden, dass die Rotation nicht zu früh gebremst wird und dadurch die Staubabscheidung, insbesondere die Feinstaubabscheidung, leidet. Das Luftführungsmittel kann auch zur Verstärkung der Rotation der Saugluft eingesetzt werden, um die Abscheidewirkung des Fliehkraftabscheiders zu vergrößern. In diesem Fall kann dadurch, dass die Staubauswurföffnung sich höchstens zu 50% ihrer Höhe über einen Abschnitt des Luftführungsmittels erstreckt, erreicht werden, dass die Verstärkung nicht zu früh stattfindet und folglich der Druckverlust und die Geräuschentwicklung nicht übermäßig ansteigen. Insgesamt erlaubt es die Erfindung also, ein besonders günstiges Verhältnis zwischen Feinstaubabscheidung und Druckverlust zu erreichen und gleichzeitig die Geräuschentwicklung des Fliehkraftabscheiders vergleichsweise gering zu halten. Auch lässt sich durch die Erfindung wirksam vermeiden, dass sich im Bereich des Luftführungsmittels Haare aus der Saugluft anlagern, die z.B. das Luftführungsmittel umschlingen.

Unter ein Abschnitt des Luftführungsmittels ist im Sinne der vorliegenden Erfindung nur ein Teil des Luftführungsmittels zu verstehen, der tatsächlich eine luftführende Wirkung zur Beeinflussung der Rotation der Saugluft hat, etwa dadurch, dass er flügelförmig ausgebildet ist, wie weiter oben diskutiert. Teile des Luftführungsmittels, die keinen Einfluss auf die Rotation der Saugluft haben, bilden folglich keinen Abschnitt des Luftführungsmittels im Sinne der vorliegenden Erfindung.

Der Abschnitt des Luftführungsmittels, über den sich die Staubauswurföffnung zu dem erfindungsgemäß geforderten Teil ihrer Höhe erstreckt, kann grundsätzlich natürlich auch das gesamte Luftführungsmittel sein, wenn letzteres nicht über die Höhe der Staubauswurföffnung hinausragt. Wie weiter unten ausgeführt sind jedoch Ausführungen der Erfindung bevorzugt, bei denen das Luftführungsmittel sich auch jenseits der Staubauswurföffnung in Richtung des Saugluftauslasses erstreckt. Natürlich erfasst die Erfindung auch Ausführungsformen, bei denen die Staubauswurföffnung sich in ihrer Höhe überhaupt nicht über einen Abschnitt des Luftführungsmittels erstreckt. Vorzugsweise erstreckt sie sich jedoch wenigstens über einen Teil des Luftführungsmittels.

Die Höhe der Staubauswurfsöffnung ist ihre Erstreckung in Richtung der Transportrichtung der Saugluft am Luftführungsmittel. Die Staubauswurföffnung kann erfindungsgemäß auch aus einer Mehrzahl voneinander getrennter Öffnungen bestehen, z.B. einem Schlitz- oder Lochgitter, die im Sinne der vorliegenden Erfindung in ihrer Gesamtheit die Staubauswurföffnung bilden. In diesem Fall ist die Höhe der Stabauswurföffnung die Erstreckung von der Unterkante des untersten zur Oberkante der obersten Öffnung.

Mit der Erfindung kann vorteilhafterweise die Abscheideleistung, insbesondere in Bezug auf die Feinstaubabscheidung, verbessert und/oder der Druckverlust verringert werden. Außerdem kann die Geräuschentwicklung verringert werden können.

### Kurzbeschreibung der Zeichnungen

Weitere vorteilhafte Ausgestaltungen werden nachfolgend an Hand der in den Zeichnungen dargestellten Ausführungsbeispiele, auf das die Erfindung jedoch nicht beschränkt ist, näher beschrieben.

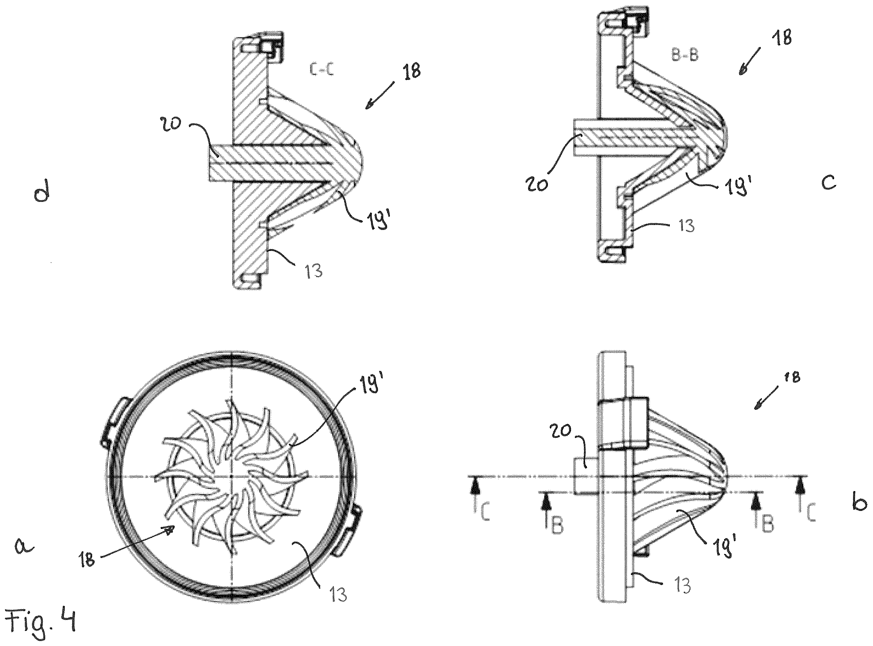

Es zeigen schematisch:

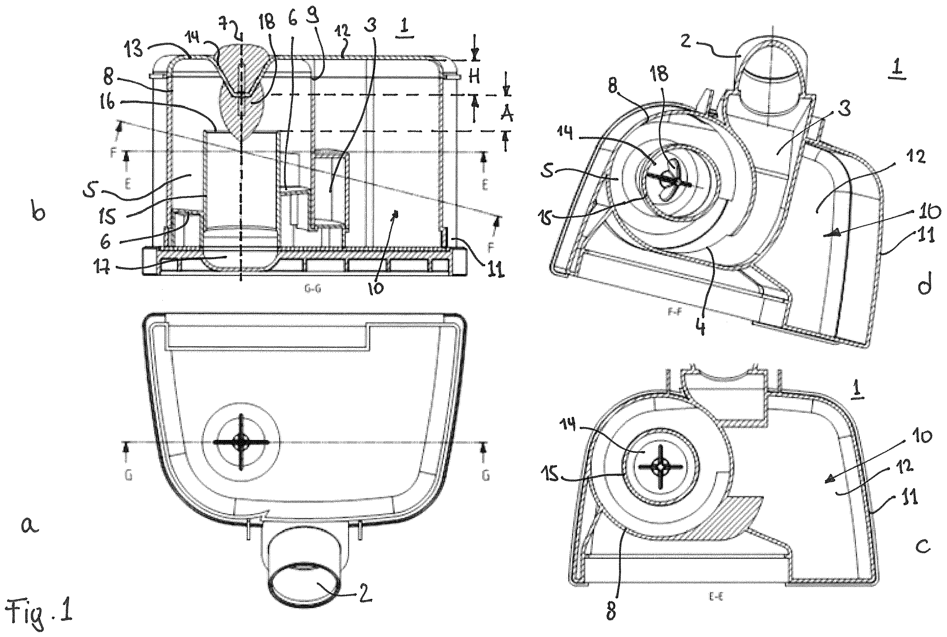

- Fig. 1: in Teilfigur a einen erfindungsgemäßen Fliehkraftabscheider von oben; in Teilfigur b einen Querschnitt durch die in Teilfigur a eingezeichnete Ebene G-G, wobei eine erste Ausführung eines an einem Apexkegel angeordneten Luftführungsmittels dargestellt ist; in Teilfigur c einen Querschnitt durch die in Teilfigur b eingezeichnete Ebene E-E und in Teilfigur d einen Querschnitt durch die in Teilfigur b dargestellte Ebene F-F;

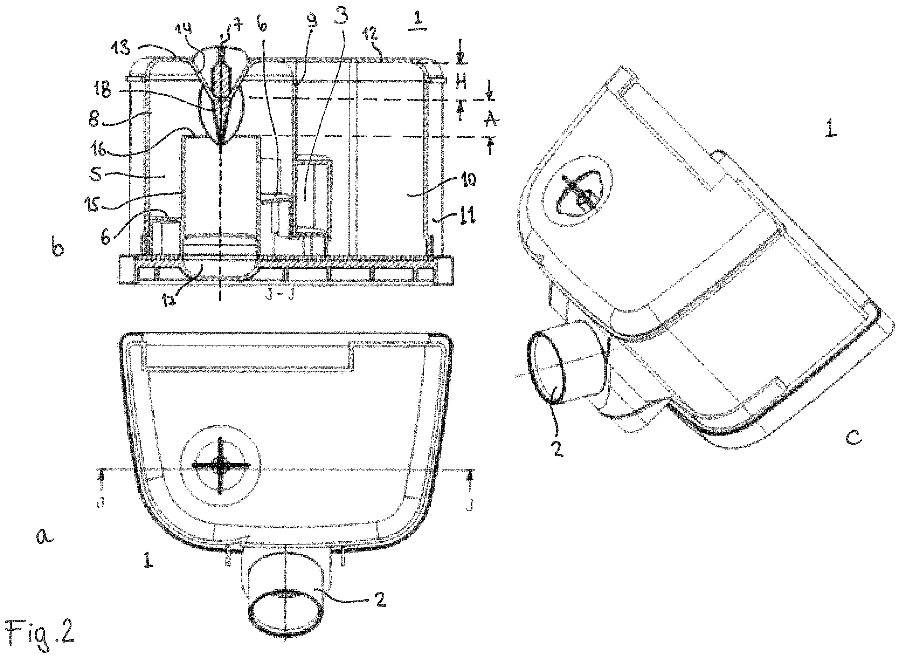

- Fig. 2: in Teilfigur a den schon in Figur 1 dargestellten Fliehkraftabscheider von oben; in Teilfigur b einen Querschnitt durch die in Teilfigur a angegebene Ebene J-J und in Teilfigur c eine perspektivische Ansicht des Fliehkraftabscheiders;

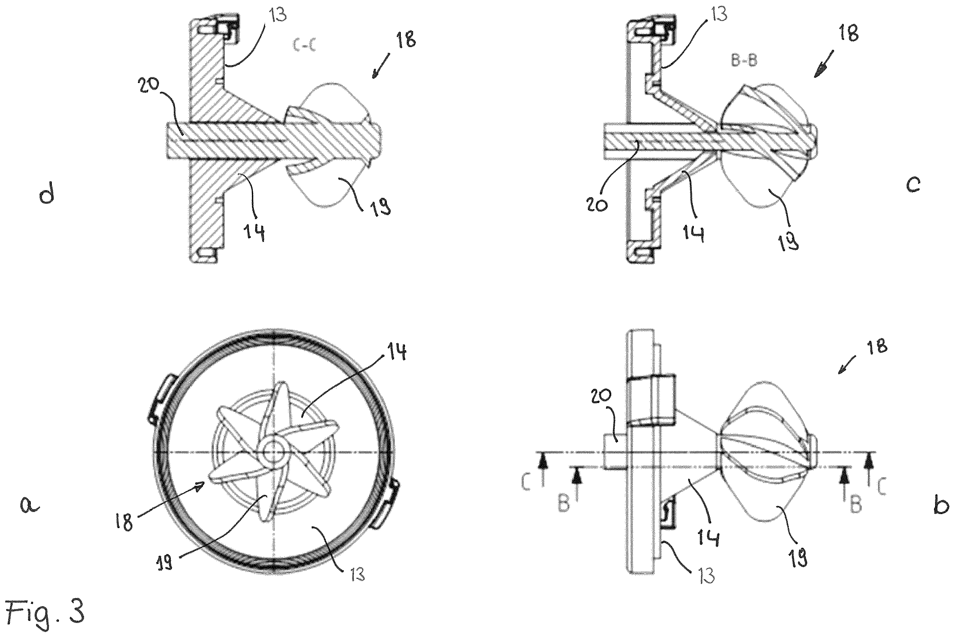

- Fig. 3: in Teilfigur a eine zweite Ausführung eines Luftführungsmittels von oben; in Teilfigur b das in Teilfigur a dargestellte Luftführungsmittel in einer Seitenansicht; in Teilfigur c einen Querschnitt durch die in Teilfigur b dargestellte Ebene B-B; und in Teilfigur d einen Querschnitt durch die in Teilfigur b eingezeichnete Ebene C-C;
und schließlich
- Fig. 4: in Teilfigur a eine dritte Ausführung eines Luftführungsmittels von oben; in Teilfigur b das in Teilfigur a dargestellte Luftführungsmittel in einer Seitenansicht; in Teilfigur c einen Querschnitt durch die in Teilfigur b dargestellte Ebene B-B; und in Teilfigur d einen Querschnitt durch die in Teilfigur b eingezeichnete Ebene C-C.

### Ausführliche Beschreibung anhand von Ausführungsbeispielen

Bei der nachfolgenden Beschreibung bevorzugter Ausführungsformen der vorliegenden Erfindung bezeichnen gleiche Bezugszeichen gleiche oder vergleichbare Komponenten.

Figuren 1 und 2 zeigen in insgesamt sieben unterschiedlichen Ansichten eine Ausführung des erfindungsgemäßen Fliehkraftabscheiders 1 als Wirbelrohrabscheider. Der Fliehkraftabscheider 1 ist in dem Staubsauger typischerweise einer Saugluftführung, die dem Fliehkraftabscheider 1 staubbeladene Saugluft zuführt, nachgeschaltet, und einer Motor-Gebläse-Einheit zum Erzeugen eines Saugluftstroms vorgeschaltet. Dabei können zwischen Saugluftführung und Fliehkraftabscheider 1 und/oder auch zwischen Fliehkraftabscheider 1 und Motor-Gebläse-Einheit eine oder mehrere weitere Einrichtungen geschaltet sein, z. B. Filter.

Die staubbeladene Saugluft gelangt an einen Saugluftstutzen 2 in einem Sauglufteinlasskanal 3 des Fliehkraftabscheiders 1 und wird von dort tangential durch einen Sauglufteinlass 4 in den kreiszylinderrohrförmigen Abscheideraum 5 geführt. Dort bringt eine schraubenförmige Luftleitrampe 6 die Saugluft auf eine schraubenförmige Bahn in dem Abscheideraum 5. Folglich hat die Saugluft im Abscheideraum 5 einen rotierenden Bewegungsanteil um eine Mittelachse 7 des Abscheideraums 5 herum und einen translatorischen Anteil in einer Richtung parallel zur Mittelachse 7. Durch den Rotationsanteil der Saugluftbewegung verursachte Zentrifugalkräfte scheiden einen Staubanteil der Saugluft in Richtung des Mantels 8 des Abscheideraums 5 ab. Gleichzeitig werden die Staubpartikel durch den translatorischen Anteil der Saugluftbewegung in Längsrichtung des Abscheideraums zu dem dem Sauglufteinlass 4-Ende gegenüberliegenden Ende des Abscheideraums 5 bewegt. Dort befindet sich im Mantel 8 des Abscheideraums 5 eine Staubauswurföffnung 9, durch die der abgeschiedene Staub in einen an den Abscheideraum 5 angrenzenden Staubsammelraum 10 gelangen kann, wo der Staub gelagert wird.

Der Fliehkraftabscheider 1 ist in dem Staubsauger entnehmbar vorgesehen und außerdem zweiteilig mit einem Fliehkraftabscheiderkorpus 11 und einem Fliehkraftabscheiderdeckel 12 ausgebildet. Deshalb kann der Fliehkraftabscheider 1 aus dem Staubsauger entnommen und durch Abnehmen des Deckels 12 geöffnet werden, wobei insbesondere auch der Staubsammelraum 10 zum Entleeren geöffnet werden kann. Nach dem Leeren kann der Deckel 12 wieder auf den Korpus 11 aufgesetzt und der Fliehkraftabscheider 1 wieder in den Staubsauger eingesetzt werden.

Auf der Staubauswurfsöffnungsseitigen Endfläche 13 des Abscheideraums 5 ist außerdem ein Apexkegel 14 vorgesehen, der die Saugluft in Richtung eines in ein Tauchrohr 15 mündenden Saugluftauslasses 16 leitet. Durch den Saugluftauslass 16 gelangt die von dem Staubanteil befreite Saugluft aus dem Abscheideraum 5 heraus und wird durch einen Saugluftauslasskanal 17 aus dem Fliehkraftabscheider 5 heraus in Richtung in Richtung Motor-Gebläse-Einheit geleitet. Dazu wird die Saugluft, unterstützt durch den Apexkegel 14, vom Äußeren des Abscheideraums 5 in dessen Inneres gelenkt und dabei die Transportrichtung der Saugluft gerade umgekehrt. Der Apexkegel 14 ist als Kegelstumpf mit einer geraden Mantellinie ausgebildet. Aus dem Apexkegel 14 stehen vier flächenförmige Elemente hervor, die ein Luftführungsmittel 18 zum Beeinflussen der Rotation der Saugluft bilden. Luftführungsmittel 18 und Apexkegel 14 bilden also im geometrischen Sinne eine Durchdringung. Das Luftführungsmittel 18 ist an dem Apexkegel 14 mit Hilfe eines Stifts gehalten, der die Deckfläche des Apexkegels durchdringt und auf einer Apexkegelinnenseite durch ein kreuzförmiges Gegenstück gesichert ist.

Das Luftführungsmittel 18 ist rotierbar an dem Apexkegel angeordnet. In einer Ausführung der Erfindung wird es über den Stift von einem Motor (nicht dargestellt) angetrieben. Die Drehrichtung des Luftführungsmittels 18 ist in einer Ausführung der Erfindung entgegen der Drehrichtung der Saugluft. Dadurch kann der Rotationsanteil der Saugluft besonders effektiv abgeschwächt werden. Dadurch, dass die Abschwächung im Wesentlichen erst dann geschieht, wenn der Staub bereits durch die Staubauswurföffnung 9 abgeschieden worden ist, hat sie nur einen geringen oder keinen Einfluss auf die Abscheideleistung des Fliehkraftabscheiders. Gleichzeitig führt die Abschwächung der Rotation jedoch zu einer Verringerung des Druckverlustes und Verringerung der Geräuschentwicklung, insbesondere auch in dem nachfolgenden Tauchrohr15.

Eine besonders effektive Abschwächung der Rotation gelingt dadurch, dass das Luftführungsmittel 18 sogar durch den Saugluftauslass 16 in das Tauchrohr 15 hineinreicht. Es ist aber auch möglich, den Motor, der das Luftführungsmittel 18 antreibt, in umgekehrter Richtung, also entgegen der Rotationsrichtung der staubbeladenen Saugluft zu betreiben. In diesem Fall kann die Abscheideleistung des Fliehkraftabscheiders 1 erhöht werden, wobei allerdings ein erhöhter Druckverlust und eine erhöhte Geräuschentwicklung in Kauf genommen werden müssen.

In den Figuren 1 und 2 ist auch die Höhe H der Staubauswurföffnung 9 im Mantel 8 des kreiszylinderrohrförmigen Abscheideraums 5 dargestellt. Es ist zu sehen, dass das Luftführungsmittel 18 zu weniger als der Hälfte der Höhe H in die Staubauswurföffnung 9 hineinreicht, sich die Staubauswurföffnung 9 also zu weniger als der Hälfte ihrer Höhe über einen Abschnitt des Luftführungsmittels 18 erstreckt. Weiter erstreckt sich das Luftführungsmittel 18 über die gesamte Höhe vom saugluftanlassseitigen Rands der Staubauswurföffnung 9 bis hin zum Saugluftauslass 16 und sogar noch darüber hinaus in das Tauchrohr 15 hinein.

Eine alternative Ausführung des Luftführungsmittels ist in Figur 3 dargestellt. Dabei ist das Luftführungsmittel 18 auf die Deckfläche des Apexkegels 14 aufgesetzt, es steht also kein Teil des Luftführungsmittels aus der Mantelfläche hervor. Das Luftführungsmittel 18 besteht aus einer Vielzahl von flächenförmigen Elementen 19, die bezüglich der Längsachse des Luftführungsmittels geneigt sind. Mit Hilfe eines Stifts 20 des Luftführungsmittels 18, der durch die Deckfläche des Apexkegels 14 dringt, kann das Luftführungsmittel 18 mit einem Motor angetrieben werden. Alternativ kann das Luftführungsmittel 18 aber auch selbst eine Einrichtung, z. B. ein Dynamogerät zur Stromerzeugung oder einen Filterabreiniger für einen Filter des Staubsaugers oder des Fliehkraftabscheiders 1 betreiben. Die Hüllkreisdurchmesser der Luftführungsmittel-Querschnittsflächen, die senkrecht zur zum Saugluftauslass 16 weisenden Richtung verlaufen, nehmen ausgehend von der Stirnfläche 13 des Abscheideraums in Richtung Saugluftauslass 16 zunächst zu und dann wieder ab. An der Stelle seines größten Umfangs weist der Hüllkreis einen Durchmesser auf, der gerade dem Durchmesser des Saugluftauslasses 16 entspricht.

Schließlich ist in Figur 4 eine weitere Ausführungsform des Luftführungsmittels 18 dargestellt. In diesem Fall ist das Luftführungsmittel 18 über den Apexkegel 14 gestülpt, es verläuft also über die Deck- und die Mantelfläche des Kegels 14. Das Luftführungsmittel 18 weist flächenartige Schaufeln 19' auf, die zwischen sich Kanäle bilden, durch die die Saugluft streicht. Wiederum wird das Luftführungsmittel 18 über einen Stift 20 angetrieben, der die Deckfläche des Apexkegels 14 durchdringt und an einen Motor oder ein Dynamo angeschlossen ist.

Mit der Erfindung kann vorteilhafterweise die Abscheideleistung, insbesondere in Bezug auf die Feinstaubabscheidung, verbessert und/oder der Druckverlust verringert werden. Außerdem kann die Geräuschentwicklung verringert werden können. Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Fliehkraftabscheider
- 2: Saugluftstutzen
- 3: Sauglufteinlasskanal
- 4: Sauglufteinlass
- 5: Abscheideraum
- 6: Luftleitrampe
- 7: Mittelachse
- 8: Mantel des Abscheideraums
- 9: Staubauswurföffnung
- 10: Staubsammelraum
- 11: Fliehkraftabscheiderkorpus
- 12: Fliehkraftabscheiderdeckel
- 13: Staubauswurfsöffnungsseitigen Endfläche des Abscheideraums
- 14: Apexkegel
- 15: Tauchrohr
- 16: Saugluftauslass
- 17: Saugluftauslasskanal
- 18: Luftführungsmittel
- 19: flächenförmige Elemente des Luftführungsmittels
- 20: Stift
- A: Abstand
- H: Höhe (der Staubauswurföffnung 9)

## Patentansprüche

1. Fliehkraftabscheider (1) für einen Staubsauger umfassend: einen Abscheideraum (5), in dem Saugluft des Staubsaugers rotieren kann, einen Sauglufteinlass (4), durch den mit Staubpartikeln beladene Saugluft in den Abscheideraum (5) eintreten kann, ein stationäres Lufteinleitmittel (3, 6), um für eine Rotation der Saugluft im Abscheideraum (5) zu sorgen, eine Staubauswurföffnung (9), durch die ein mittels Zentrifugalkraft von der rotierenden Saugluft abgeschiedener Staubanteil der Saugluft aus dem Abscheideraum (5) austreten kann, und einen Saugluftauslass (16), durch den die von dem Staubanteil befreite Saugluft aus dem Abscheideraum (5) austreten kann, wobei
der Fliehkraftabscheider (1) zum Beeinflussen der Rotation der Saugluft ein im Abscheideraum (5) rotierbar angeordnetes Luftführungsmittel (18) umfasst, welches durch die Saugluft antreibbar ist, **dadurch gekennzeichnet, dass** das Luftführungsmittels (18) sich gegen die Rotationsrichtung der Saugluft dreht.

2. Fliehkraftabscheider (1) nach Anspruch 1, **dadurch gekennzeichnet, dass** sich die Staubauswurföffnung (9) höchstens zu 30% ihrer Höhe (H) über einen Abschnitt des Luftführungsmittels (18) und/oder zu mindestens 10% über einen Abschnitt des Luftführungsmittels (18) erstreckt.

3. Fliehkraftabscheider (1) nach einem der vorherigen Ansprüche, **dadurch gekennzeichnet, dass** das Luftführungsmittel (18) zu 80% oder mehr des Abstands (A), der sich von der Höhe (H) des sauglufteinlassseitigen Rands der Staubauswurföffnung (9) zum Saugluftauslass (16) erstreckt, an den Saugluftauslass (16) heranreicht.

4. Fliehkraftabscheider (1) nach einem der Ansprüche 1 bis 3, **dadurch gekennzeichnet, dass** das Luftführungsmittel (18) sich bis zur Höhe des Saugluftauslasses (16) erstreckt.

5. Fliehkraftabscheider (1) nach einem der Ansprüche 1 bis 3, **dadurch gekennzeichnet, dass** der Saugluftauslass (16) in ein Tauchrohr (15) mündet und das Luftführungsmittel (18) sich in das Tauchrohr (15) hinein erstreckt.

6. Fliehkraftabscheider (1) nach einem der vorherigen Ansprüche, **dadurch gekennzeichnet, dass** der Fliehkraftabscheider (1) als Wirbelrohrabscheider ausgebildet ist, bei dem sich die staubbeladene Luft auf einer schraubenförmigen Bahn bewegt.

7. Fliehkraftabscheider (1) nach Anspruch 6, **dadurch gekennzeichnet, dass** der Abscheideraum (5) ein Umkehrmittel (14) aufweist, um die Saugluft von einem äußeren in einen inneren Bereich des Abscheideraums (5) zu lenken um die Transportrichtung der Saugluft umzukehren.

8. Fliehkraftabscheider (1) nach einem der vorherigen Ansprüche, **dadurch gekennzeichnet, dass** das Luftführungsmittel (18) als Apexkegel (14) ausgebildet ist.

9. Fliehkraftabscheider (1) nach einem der vorherigen Ansprüche, **dadurch gekennzeichnet, dass** das Luftführungsmittel (18) zumindest ein flächenartiges Element (19) umfasst.

10. Fliehkraftabscheider (1) nach Anspruch 9, **dadurch gekennzeichnet, dass** das flächenartige Element (19) schaufelartig ausgebildet ist und das Element (19) eine lineare, progressive oder degressive Steigung besitzt.

11. Fliehkraftabscheider (1) nach Anspruch 9 oder 10, **dadurch gekennzeichnet, dass** das Luftführungsmittel (18) aus einer Durchdringung eines konusförmigen Abschnitts (14) mit zumindest einem flächenartigen Element (19) gebildet ist.

12. Fliehkraftabscheider (1) nach einem der vorherigen Ansprüche, **dadurch gekennzeichnet, dass** in einem dem Saugluftauslass (16) zugewandten Endabschnitt des Luftführungsmittels (18) der Hüllkreisdurchmesser der Luftführungsmittel-Querschnittsfläche, die senkrecht zur zum Saugluftauslass (16) weisenden Richtung verläuft, in Richtung Saugluftauslass (16) abnimmt.

13. Fliehkraftabscheider (1) nach einem der vorherigen Ansprüche, **dadurch gekennzeichnet, dass** der Saugluftauslass (16) in ein Tauchrohr (15) mündet und der maximale Hüllkreisdurchmesser der Luftführungsmittel-Querschnittsfläche, die senkrecht zur zum Saugluftauslass (16) weisenden Richtung verläuft, nicht größer als der Außendurchmesser des Tauchrohres (15) ist.

## Claims

1. Centrifugal separator (1) for a vacuum cleaner, comprising: a separation chamber (5), in which suction air of the vacuum cleaner can rotate, a suction air inlet (4), through which suction air laden with dust particles can enter the separation chamber (5), a stationary air introduction means (3, 6) in order to ensure a rotation of the suction air in the separation chamber (5), a dust ejection opening (9), through which a dust content of the suction air that has separated from the rotating suction air by means of centrifugal force can exit from the separation chamber (5), and a suction air outlet (16), through which suction air that has been freed of the dust content can exit from the separation chamber (5), wherein
in order to influence the rotation of the suction air, the centrifugal separator (1) comprises an air guide (18) which is rotatably arranged in the separation chamber (5) and which can be driven by the suction air, **characterised in that** the air guide (18) rotates against the rotational direction of the suction air.

2. Centrifugal separator (1) according to claim 1, **characterised in that** the dust ejection opening (9) extends at most by 30% of its height (H) over one section of the air guide (18) and/or at least by 10% over one section of the air guide (18).

3. Centrifugal separator (1) according to one of the preceding claims, **characterised in that** the air guide (18) approaches the suction air outlet (16) by 80% or more of the distance (A) extending from the height (H) of the suction-air-inlet-side edge of the dust ejector opening (9) to the suction air outlet (16).

4. Centrifugal separator (1) according to one of claims 1 to 3, **characterised in that** the air guide (18) extends up to the height of the suction air outlet (16).

5. Centrifugal separator (1) according to one of claims 1 to 3, **characterised in that** the suction air outlet (16) opens into an immersion tube (15) and the air guide (18) extends into the immersion tube (15).

6. Centrifugal separator (1) according to one of the preceding claims, **characterised in that** the centrifugal separator (1) is designed as a cyclone tube separator, in which the dust-laden air moves in a helical path.

7. Centrifugal separator (1) according to claim 6, **characterised in that** the separation chamber (5) has a reversing means (14), in order to direct the suction air from an external into an internal region of the separation chamber (5) in order to reverse the direction of transport of the suction air.

8. Centrifugal separator (1) according to one of the preceding claims, **characterised in that** the air guide (18) is designed as an apex cone (14).

9. Centrifugal separator (1) according to one of the preceding claims, **characterised in that** the air guide (18) comprises at least one planar element (19).

10. Centrifugal separator (1) according to claim 9, **characterised in that** the planar element (19) is shovel-like and the element (19) has a linear, progressive or degressive gradient.

11. Centrifugal separator (1) according to claim 9 or 10, **characterised in that** the air guide (18) is formed from a penetration of a cone-shaped section (14) with at least one planar element (19).

12. Centrifugal separator (1) according to one of the preceding claims, **characterised in that** the envelope circle diameter of the air guide cross-sectional area, which runs perpendicular to the direction pointing towards the suction air outlet (16), decreases in the direction of the suction air outlet (16) in an end section of the air guide (18) facing the suction air outlet (16).

13. Centrifugal separator (1) according to one of the preceding claims, **characterised in that** the suction air outlet (16) opens into an immersion tube (15) and the maximum envelope circle diameter of the air guide cross-sectional area which runs perpendicular to the direction pointing towards the suction air outlet (16) is not greater than the external diameter of the immersion tube (15).

## Revendications

1. Séparateur centrifuge (1) pour un aspirateur, comprenant : une chambre de séparation (5) dans laquelle l'air aspiré de l'aspirateur peut tourner, une entrée d'air aspiré (4) par laquelle l'air aspiré chargé de particules de poussière peut entrer dans la chambre de séparation (5), un moyen fixe d'introduction d'air (3, 6) servant à assurer une rotation de l'air aspiré dans la chambre de séparation (5), un orifice d'éjection de poussière (9) par lequel une fraction de poussière de l'air aspiré, séparée de l'air aspiré en rotation par la force centrifuge, peut sortir de la chambre de séparation (5), et une sortie d'air aspiré (16) par laquelle l'air aspiré débarrassé de sa fraction de poussière peut sortir de la chambre de séparation (5), ledit séparateur centrifuge (1), de manière à agir sur la rotation de l'air aspiré, comprenant un moyen de guidage d'air (18) monté tournant dans la chambre de séparation (5) et pouvant être entraîné par l'air aspiré, **caractérisé en ce que** le moyen de guidage d'air (18) tourne dans le sens opposé au sens de rotation de l'air aspiré.

2. Séparateur centrifuge (1) selon la revendication 1, **caractérisé en ce que** l'orifice d'éjection de poussière (9) s'étend au maximum à 30 % de sa hauteur (H) sur une partie du moyen de guidage d'air (18) et/ou au minimum à 10 % sur une partie du moyen de guidage d'air (18).

3. Séparateur centrifuge (1) selon l'une des revendications précédentes, **caractérisé en ce que** le moyen de guidage d'air (18) atteint la sortie d'air aspiré (16) à 80 % ou plus de la distance (A) qui s'étend de la hauteur (H) du bord, côté entrée d'air aspiré, de l'orifice d'éjection de poussière (9) vers la sortie d'air aspiré (16).

4. Séparateur centrifuge (1) selon l'une des revendications 1 à 3, **caractérisé en ce que** le moyen de guidage d'air (18) s'étend jusqu'à la hauteur de la sortie d'air aspiré (16).

5. Séparateur centrifuge (1) selon l'une des revendications 1 à 3, **caractérisé en ce que** la sortie d'air aspiré (16) débouche dans un tube plongeur (15) et le moyen de guidage d'air (18) s'étend jusque dans le tube plongeur (15).

6. Séparateur centrifuge (1) selon l'une des revendications précédentes, **caractérisé en ce que** le séparateur centrifuge (1) est réalisé sous forme de séparateur à tube vortex dans lequel l'air chargé de poussière se déplace sur une trajectoire hélicoïdale.

7. Séparateur centrifuge (1) selon la revendication 6, **caractérisé en ce que la** chambre de séparation (5) comporte un moyen d'inversion (14) pour conduire l'air aspiré d'une zone extérieure dans une zone intérieure de la chambre de séparation (5) de manière à inverser la direction de transport de l'air aspiré.

8. Séparateur centrifuge (1) selon l'une des revendications précédentes, **caractérisé en ce que** le moyen de guidage d'air (18) est réalisé sous forme de cône apex (14).

9. Séparateur centrifuge (1) selon l'une des revendications précédentes, **caractérisé en ce que** le moyen de guidage d'air (18) comprend au moins un élément étendu en surface (19).

10. Séparateur centrifuge (1) selon la revendication 9, **caractérisé en ce que** l'élément étendu en surface (19) est réalisé sous forme de pale et ledit élément (19) a une pente linéaire progressive ou dégressive.

11. Séparateur centrifuge (1) selon la revendication 9 ou 10, **caractérisé en ce que** l'élément de guidage d'air (18) est formé par une pénétration d'une partie conique (14) pourvue d'au moins un élément étendu en surface (19).

12. Séparateur centrifuge (1) selon l'une des revendications précédentes, **caractérisé en ce que,** dans une partie d'extrémité, tournée vers la sortie d'air aspiré (16), du moyen de guidage d'air (18), le diamètre du cercle enveloppant de la surface de section transversale du moyen de guidage d'air, qui s'étend perpendiculairement à la direction orientée vers la sortie d'air aspiré (16), diminue en direction de la sortie d'air aspiré (16).

13. Séparateur centrifuge (1) selon l'une des revendications précédentes, **caractérisé en ce que** la sortie d'air aspiré (16) débouche dans un tube plongeur (15) et le diamètre maximal du cercle enveloppant de la surface de section transversale du moyen de guidage d'air, qui s'étend perpendiculairement à la direction orientée vers la sortie d'air aspiré (16), n'est pas plus grand que le diamètre extérieur du tube plongeur (15).
